# EUROPÄISCHE PATENTANMELDUNG

(11) **EP 4 163 525 A1**
(43) Veröffentlichungstag der Anmeldung: **12.04.2023**
(21) Anmeldenummer: 22196262.4
(22) Anmeldetag: 19.09.2022
(51) Int. Cl.: F16K 27/02, F16B 17/00, F16B 21/18

(54) **VENTILANORDNUNG MIT INTEGRIERTEM VENTIL**

(30) Priorität: 11.10.2021 DE 102021126286
(71) Anmelder: Weber-Hydraulik GmbH, 78467 Konstanz (DE)
(72) Erfinder: Müller, Peter, 88719 Stetten (DE)
(74) Vertreter: LBP Lemcke, Brommer & Partner Patentanwälte mbB

(57) **Zusammenfassung**

Bei einer Ventilanordnung mit einem ein Ventil aufnehmenden Bauteil, in welchem eine Kavität zur Aufnahme eines Ventileinsatzes ausgebildet ist, und mit einem in der Kavität aufgenommenen Ventileinsatz, ist vorgesehen, dass oberhalb des Ventileinsatzes (2) ein elastisch oder plastisch verformbares Halteelement (5, 20) eingesetzt ist, welches durch Verformung eine formschlüssige Verbindung mit dem Bauteil (1) innerhalb der Kavität (3) ausbildet und damit den Ventileinsatz (2) in der Kavität (3) sichert. Das Halteelement (5) ist in einer ersten Ausführungsform als ein federelastischer, geschlitzter Sprengring, insbesondere aus Runddraht, ausgebildet und der Ventileinsatz (2) weist an seiner dem Halteelement (4) zugewandten Seite eine radial umlaufende Fase (7) auf, gegen die das Halteelement (5) anliegt. In einer zweiten Ausführungsform ist das Halteelement (20) als ein weichmetallisches Verformungselement ausgebildet, und in der Kavität (3) ist innenseitig ein Hinterschnitt (4), insbesondere in Form einer Ringnut, ausgebildet, den das Halteelement (20) formschlüssig hintergreift.

## Beschreibung

Die vorliegende Erfindung betrifft eine Ventilanordnung mit einem ein Ventil aufnehmenden Bauteil, in welchem eine Kavität zur Aufnahme eines Ventileinsatzes ausgebildet ist, und mit einem in der Kavität aufgenommenen Ventileinsatz.

Im Bereich der Hydraulik werden häufig Ventile, insbesondere Rückschlagventile, in komplexere Ventilblöcke oder hydraulische Aggregate integriert, indem diese in Form eines Ventileinsatzes dichtend in eine hierfür vorgesehene Bohrung eingebaut werden. Durch den hydraulischen Druck wirken im Betrieb zum Teil hohe Kräfte in axialer Richtung auf den Ventileinsatz. Die Befestigung solcher Ventileinsätze erfolgt in der Praxis hauptsächlich durch Einschrauben des Ventileinsatzes, das heißt der Ventileinsatz erhält ein Außengewinde und die Bohrung ein Innengewinde, in die der Ventileinsatz eingeschraubt wird.

Untersuchungen haben ergeben, dass es bei der Montage solcher Einschraubventile immer wieder zu Montagefehlern und Leckage am Ventileinsatz kommt. Dies kann durch ein Verklemmen des Gewindes beim Einschrauben oder eine Verschmutzung des Gewindes verursacht werden. Häufig kann ein solcher Fehler bei der Montage nicht erkannt werden, da durch das Verklemmen das erforderliche Drehmoment erreicht wird, bevor die Endposition des Ventils tatsächlich erreicht ist.

Daneben existieren am Markt auch sogenannte Einsteckventile, die in eine Ventilbohrung eingesteckt und anschließend mit einer oberhalb der Ventilbohrung aufgeschraubten Befestigungsplatte oder einem anderweitigen vor der Bohrung festgeschraubten Bauteil gehalten werden.

Bei dem Einschraubvorgang kann es zum Eintrag von Schmutzpartikeln oder zur Gradbildung kommen, die im späteren Betrieb zu Ausfällen führen können. Die Verwendung von Einsteckventilen mit extern aufgeschraubten Bauteilen ist zur Montage aufwendig und allenfalls in Sonderanwendungen geeignet.

Aufgabe der Erfindung ist es, ein einfach und sicher zu montierendes Ventil anzugeben, bei dem einerseits die Montage vereinfacht, andererseits ein sicherer und fehlerfreier Betrieb gewährleistet ist.

Die Aufgabe wird in einer ersten Ausführungsform gelöst durch eine Ventilanordnung nach Anspruch 1 und in einer zweiten Ausführungsform durch eine Ventilanordnung nach Anspruch 2. Ein entsprechende Verfahren zur Montage eines Ventileinsatzes sind in den Ansprüchen 10 und 1 langegeben. Vorteilhafte Ausgestaltungen sind den abhängigen Ansprüchen zu entnehmen.

Bei einer Ventilanordnung der eingangs genannten Art ist vorgesehen, dass oberhalb des Ventileinsatzes ein elastisch oder plastisch verformbares, insbesondere ringförmiges Halteelement eingesetzt ist, welches durch Verformung eine formschlüssige Verbindung mit dem Bauteil ausbildet innerhalb der Kavität und damit den Ventileinsatz in der Kavität sichert.

Die Erfindung schafft damit ein Ventil in Form eines Ventileinsatzes, welches ohne Schraubvorgänge montiert werden kann und dennoch zuverlässig und stabil in der Kavität gehalten und gesichert wird.

Bei der ersten Ausführungsform ist in der Kavität innenseitig ein Hinterschnitt in Form einer Ringnut ausgebildet und das Halteelement ist derart elastisch verformt, dass es den Hinterschnitt formschlüssig hintergreift.

Eine besonders einfache und für die meistens Anwendungsfälle ausreichende Ausgestaltung ergibt sich, indem das Halteelement erfindungsgemäß als ein elastischer, geschlitzter Sprengring, insbesondere aus Runddraht, ausgebildet ist. Ein solcher Sprengring kann einfach eingesetzt werden, insbesondere wenn die Kavität mit einer kegelstumpfförmigen Senkung versehen ist, durch die der Sprengring beim Herunterdrücken selbsttätig zusammengedrückt wird. Erreicht der Sprengring den als Ringnut ausgebildeten Hinterschnitt, so rastet er selbsttätig ein und sichert den Ventileinsatz gegen ein Herausrutschen unter hydraulischem Druck. Zusätzlich ist der Außenrand des Ventileinsatzes mit einer Fase oder Rundung versehen. Hierdurch ergibt sich eine besonders günstige und stabile Einbausituation, da der Sprengring, wenn gegen den Ventileinsatz ein Hydraulikdruck wirkt, der diesen aus der Kavität drücken würde, der Sprengring durch die von der Fase gebildete Schrägfläche aufgeweitet und somit in seine Ringnut gepresst wird. Dies führt durch Verteilung der wirkenden Kräfte über eine große Anlage zu einer besonders geringen Flächenpressung und damit einer hohen Stabilität.

Neben Runddraht-Sprengringen sind jedoch auch gestanzte Sprengringe mit Flachprofil im Rahmen der Erfindung einsetzbar. Insbesondere kann außerdem ein Sprengring mit polygonförmigem Profil, beispielsweise einem rautenförmigen oder dreieckigen Profil eingesetzt werden, über dessen gegen die Fase anliegende Schrägfläche bei einer Druckerhöhung ebenfalls eine den Sprengring aufweitende radiale Kraft bewirkt wird. Der Schrägwinkel der Fase am Außenrand des Ventileinsatzes ist hierbei vorzugsweise an den Schrägwinkel des im Profil polygonförmigen Sprengrings angepasst. Außerdem ist vorzugsweise auch die Kontur der in der Kavität innenseitig ausgebildeten Ringnut an die Kontur des Sprengrings angepasst.

Die Fase muss nicht notwendig eine einzige den Außenrand des Ventileinsatzes umgebende Schrägfläche ausbilden, sondern kann im allgemeinen Fall auch mehrere abgestufte Schrägflächen oder eine oder mehrere Rundungen aufweisen, gegen die der ggf. mit zum Konturverlauf der Fase korrespondierender Kontur versehene Sprengring anliegt. Als Fase wird im Rahmen der vorliegenden Erfindung daher im allgemeinen Fall auch eine Verrundung des Außenrandes des Ventileinsatzes verstanden.

Bei einer Ventilanordnung der zweiten Ausführungsform ist erfindungsgemäß vorgesehen, dass oberhalb des Ventileinsatzes ein plastisch verformbares Halteelement eingesetzt ist, welches durch Verformung eine formschlüssige Verbindung mit dem Bauteil ausbildet innerhalb der Kavität und damit den Ventileinsatz in der Kavität sichert.

Bei der zweiten Ausführungsform, die insbesondere eingesetzt werden kann, wenn besonders hohe Drücke auftreten können, ist das Halteelement als ein weichmetallisches Verformungselement, insbesondere als Pressring, ausgebildet. Dieses wird oberhalb des Ventileinsatzes in die Kavität eingesetzt und nach dem Einsetzen durch plastische Verformung aufgeweitet und damit irreversibel im Durchmesser vergrößert, sodass das Verformungselement nun einen in der Kavität innenseitig insbesondere in Form einer Ringnut,ausgebildeten Hinterschnitt hintergreift. Hierdurch ergibt sich eine besonders sichere und stabile Befestigung.

Die Erfindung ist in der zweiten Ausführungsform nicht auf ein ringförmiges Halteelement beschränkt. Vielmehr können auch von einer Ringform abweichende Halteelemente, etwa sternförmige, oder anderweitig geometrisch geformte Halteelemente zum Einsatz kommen, welche geeignet sind, durch Verformung eine Aufweitung und damit eine formschlüssige Verbindung in der Kavität auszubilden.

Das Verformungselement kann insbesondere ein ringförmiges Blechteil sein, welches durch sich radial von außen bis zu einem um eine Mittelöffnung verlaufenden inneren Ringbereich erstreckende Schlitze oder Ausnehmungen in Sektoren unterteilt ist. Eine solche radiale Schlitzung des ringförmigen Verformungselements erleichtert das plastische Aufweiten und benötigt daher geringere Kräfte beim Einbau. Bei einer Weiterbildung des Verformungselementes kann dieses scheibenförmig ausgebildet sein und insbesondere der innere Ringbereich kann durch einen von radial verlaufenden Stegen unterbrochenen Ringschlitz von dem in Sektoren unterteilten Außenbereich getrennt sein. Hierdurch muss lediglich der innere Ringbereich plastisch verformt werden. Die in Sektoren unterteilten Außenbereiche werden hierdurch nach außen verlagert und hintergreifen den Hinterschnitt in der Kavität. Indem nur kleine Bereiche des radial und ringförmig geschlitzten Verformungselements verformt werden müssen, kommt man bei der Montage mit sehr geringen Kräften zur Aufweitung des Verformungselements aus. Dies kann beispielsweise über ein Montagewerkezeug mit radial nach außen verstellbaren Backen bewerkstelligt werden, die über einen konischen Spreizdorn auseinandergedrückt werden.

Alternativ kann das Verformungselement auch gewölbt ausgebildet sein. In diesem Fall wird durch Aufwenden einer axialen Kraft die Wölbung eingedrückt und führt damit zu einer radialen Aufweitung des Verformungselements.

Zweckmäßigerweise besitzt der Ventileinsatz mindestens eine radial umlaufende Dichtung, insbesondere eine in eine Dichtungsnut eingesetzte Weichdichtung, z.B. eine O-Ring-Dichtung, welche den Ventileinsatz gegen die Kavität dichtet. Somit ergibt sich eine hydraulisch dichte und mechanisch stabile Konfiguration.

Der Ventileinsatz kann mit einem gewissen axialen Spiel in die Kavität eingesetzt sein. Dies erleichtert insbesondere das Einsetzen eines elastisch verformbaren Halteelements, wie etwa des genannten Runddraht-Sprengrings, da dieser, bevor er in die Ringnut an der Innenseite der Kavität einrastet, etwas weiter nach unten gedrückt werden muss. Das axiale Spiel beeinträchtigt die Funktion des Ventileinsatzes in der Regel nicht, da es keine große Rolle spielt, ob der Ventileinsatz unter hydraulischem Druck geringfügig innerhalb seiner Kavität in axialer Richtung nach oben oder unten wandert.

Das das Ventil aufnehmende Bauteil kann insbesondere ein Ventilblock, ein zylindrisches Ventilgehäuse oder ein mit einem integrierten Ventil versehenes hydraulisches Aggregat wie etwa eine Pumpe oder ein Hydraulikzylinder sein.

Bei einem Verfahren zur Montage eines Ventileinsatzes in einem den Ventileinsatz aufnehmenden Bauteil, bei dem in dem Bauteil eine Kavität zur Aufnahme des Ventileinsatzes ausgebildet ist, ist gemäß der ersten Ausführungsform erfindungsgemäß vorgesehen, dass in der Kavität innenseitig ein Hinterschnitt in Form einer Ringnut ausgebildet ist, dass der Ventileinsatz in die Kavität eingeschoben wird und dass anschließend oder zusammen mit dem Ventileinsatz oberhalb des Ventileinsatzes ein elastisch verformbares Halteelement in Form eines Runddraht-Sprengringes eingesetzt wird, welches den Hinterschnitt formschlüssig hintergreift und so innerhalb der Kavität eine formschlüssige Verbindung mit dem Bauteil ausbildet und damit den Ventileinsatz in der Kavität sichert. Der Runddraht-Sprengring wird beim Einsetzen in Radialrichtung komprimiert und hintergreift nach dem Einsetzen den als Ringnut ausgebildeten Hinterschnitt formschlüssig. Der Ventileinsatz weist an seiner dem Halteelement zugewandten Seite eine radial umlaufende Fase auf, gegen die das Halteelement (5) anliegt.

Zur Montage des Ventileinsatzes gemäß der zweiten Ausführungsform ist vorgesehen, dass nach Einführen des Ventileinsatzes oder zusammen mit dem Ventileinsatz oberhalb des Ventileinsatzes ein plastisch verformbares Halteelement in die Kavität eingesetzt wird und das Halteelement nach dem Einsetzen innerhalb der Kavität durch plastische Verformung aufgeweitet wird, sodass es einen in der Kavität innenseitig ausgebildeten Hinterschnitt, insbesondere in Form einer Ringnut, formschlüssig hintergreift und hierdurch eine formschlüssige Verbindung mit dem Bauteil ausbildet wird, welche den Ventileinsatz in der Kavität sichert.

Weitere Vorteile und Eigenschaften der Erfindung ergeben sich aus der nachfolgenden Beschreibung eines Ausführungsbeispiels anhand der Figuren. Es zeigt:
- Figur 1: einen Längsschnitt durch einen in eine Kavität eingesetzten Ventileinsatz, der mit einem Runddrahtsprengring gesichert ist,
- Figur 2: eine isometrische Darstellung eines im Rahmen der Erfindung verwendbaren Ventileinsatzes,
- Figur 3: eine Draufsicht auf ein plastisch verformbares Halteelement in Form eines Pressrings,
- Figur 4: ein Ausführungsbeispiel eines elastisch verformbaren Halteelements, welches sich bei Verformung innerhalb einer Kavität verkrallt,
- Figur 5: einen Schnitt durch ein Bauteil mit einem in eine Kavität eingesetzten Ventileinsatz, der mit dem Halteelement aus Figur 4 gesichert ist und
- Figur 6: eine Detailzeichnung der innerhalb der Kavität ausgebildeten formschlüssigen Verbindung.

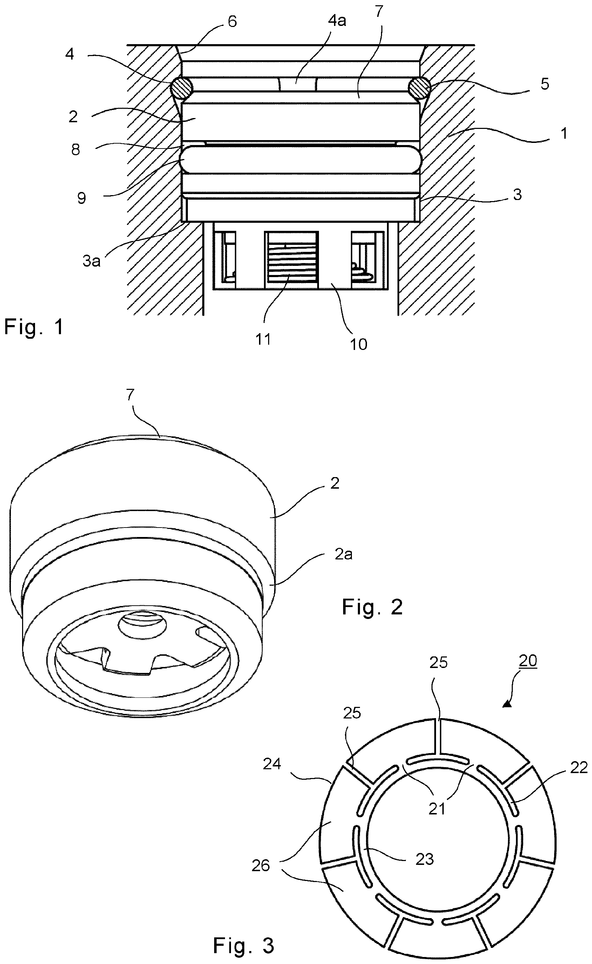

In Figur 1 ist ein Querschnitt durch ein Bauteil 1 dargestellt, welches einen Ventileinsatz 2 aufnimmt. Bei dem Bauteil 1 kann es sich beispielsweise um einen Ventilblock handeln. Der Ventileinsatz 2 umfasst in diesem Ausführungsbeispiel ein Rückschlagventil. In dem Bauteil 1 ist eine Stufenbohrung 3 ausgebildet, in die der Ventileinsatz 2 eingesetzt ist. Die Stufenbohrung 3 besitzt einen Absatz 3a, gegen den eine an dem Ventileinsatz 2 ausgeformte Stufe 2a anliegt. Oberhalb des Ventileinsatzes ist in der Stufenbohrung 3 eine Ringnut 4 eingefräst oder gedreht. In die Ringnut 4 ist ein Runddrahtsprengring 5 eingesetzt, der den Ventileinsatz 2 gegen ein Herausrutschen sichert. In ihrem Mündungsbereich ist die Stufenbohrung 3 konisch eingesenkt, sodass sich in diesem Bereich eine Schrägfläche 6 ergibt. Diese sorgt vor allem dafür, dass eine an dem Ventileinsatz befindliche Dichtung 9 beim Einsetzen nicht beschädigt wird. Außerdem kann die Schrägfläche 6 dazu beitragen, dass der mit einen geschlitzten Bereich 4a versehene Runddrahtsprengring 5 beim Einsetzen komprimiert wird, sodass er leichter in die Stufenbohrung 3 heruntergedrückt werden kann, bis er in der Ringnut 4 einrastet. An seinem oberen Rand ist der Ventileinsatz 2 mit einer Fase 7 versehen, mit der der Ventileinsatz von unten gegen den Runddrahtsprengring 5 anliegt.

In seinem mittleren Bereich besitzt der Ventileinsatz 2 eine Dichtungsnut 8 mit einer O-Ring-Dichtung 9. Die O-Ring-Dichtung 9 dichtet den Ventileinsatz gegenüber der Stufenbohrung 3 ab. In seinem unteren Bereich besitzt der Ventileinsatz 2 einen Ventilkorb 10, der eine Rückstellfeder 11 aufnimmt, die in an sich bekannter Weise gegen einen in dem Ventileinsatz enthaltenen Schließkörper, etwa eine Schließkugel, drückt und diese im drucklosen Zustand gegen einen Ventilsitz hält. Wird in der Stufenbohrung 3 über eine nicht gezeigte hydraulische Verbindung Druck angelegt, so sperrt das von dem Ventileinsatz 2 gebildete Rückschlagventil. Hierdurch wird eine Kraft auf dem Ventileinsatz 2 ausgeübt, der diesen in Richtung aus der Bohrung 3 heraus gegen den Runddrahtsprengring 5 presst. Der Runddrahtsprengring 5 bildet in der Ringnut 4 eine formschlüssige Verbindung, gegen die die Fase 7 anliegt und den Ventileinsatz in der Stufenbohrung 3 hält und sichert. Durch die Fase 7 wirkt auf den Sprengring 5 eine radial nach außen gerichtete Kraftkomponente, welche verhindert, dass der Runddrahtsprengring 5 aus der Ringnut 4 herausspringen kann.

In die Stufenbohrung 3 ist der Ventileinsatz 2 mit einem gewissen axialen Spiel eingesetzt. Dieses ist erforderlich, damit der Runddrahtsprengring 5 weit genug heruntergedrückt werden kann, damit er in der Ringnut 4 einrastet.

In Figur 2 ist beispielhaft ein Ventileinsatz 2 in Form eines Rückschlagventils gezeigt. Dichtungsnut 8 und O-Ring-Dicht 9 sind hier der besseren Übersichtlichkeit halber weggelassen.

Die Erfindung ist nicht auf Rückschlagventile begrenzt. Vielmehr können auch komplexere Wegeventile in erfindungsgemäßer Weise in ein Bauteil 1 integriert werden. In diesem Fall können beispielsweise in unterschiedlicher Höhe mehrere seitliche Öffnungen bzw. Abgänge von der Kavität 3 ausgebildet sein, durch die jeweils Hydraulikfluid ein- oder austreten kann. Der Ventileinsatz 2 selbst kann mehrere Ringdichtungen besitzen, welche einzelne Bereiche des Ventileinsatzes 2 gegeneinander abdichtet. Derartige Ventileinsätze können als Schieber- oder Sitzventile ausgeführt sein.

Figur 3 zeigt ein alternatives Halteelement in Form eines Pressrings 20, welches anstelle des Runddrahtsprengrings 5 zur Sicherung des Ventileinsatzes 2 verwendet werden kann. Der Pressring 20 besteht aus einem flachen ringförmigen Blechteil mit einer zentralen, kreisrunden Aussparung. Ein durch Stege 21 segmentweise unterbrochener Ringschlitz 22 unterteilt den Pressring in einen schmalen inneren Ring 23 und einen breiteren Außenbereich 24. Im Außenbereich 24 ist der Pressring durch radial verlaufende Schlitze 25 bis auf Höhe des Ringschlitzes 22 geschlitzt, sodass im Außenbereich einzelne Sektorsegmente 26 ausgebildet sind.

Der Außendurchmesser des Pressrings 20 ist so gewählt, dass er dem Eingangsdurchmesser der Stufenbohrung 3 entspricht bzw. geringfügig kleiner ist, und somit in diese eingesetzt werden kann. Wird nun der Pressring 20 oberhalb des Ventileinsatzes 2 in die Stufenbohrung 3 eingefügt und kommt auf der Stirnfläche des Ventileinsatzes 2 zu liegen, so kann er durch ein dornförmiges Spreizwerkzeug im Bereich des schmalen Innenrings 23 durch geringe Kraftaufwendung aufgeweitet werden. Hierdurch werden die einzelnen Segmentsektoren 26 nach außen verlagert und hintergreifen den von der Ringnut 4 gebildeten Hinterschnitt in der Stufenbohrung 3, sodass der Pressring 20 formschlüssig in der Ringnut 4 liegt und den Ventileinsatz 2 in der Stufenbohrung 3 sichert. Um einen sicher Sitz des Pressrings in der Ringnut 4 sicherzustellen, ist dieser im zweiten Ausführungsbeispiel entsprechend der flachzylindrischen Form des Pressrings angepasst ausgeformt, d.h. nicht wie in Figur 1 gezeigt gerundet, sondern mit eckigem Profil.

Mit dem in Figur 3 gezeigten Pressring 20 können nach Untersuchungen der Anmelderin deutlich höhere Kräfte von dem Ventileinsatz 2 auf das Bauteil 1 abgetragen werden als bei dem im ersten Ausführungsbeispiel gezeigten Sprengring 5, sodass die Pressringverbindung vor allem bei Anwendung mit höheren Drücken bevorzugt ist.

Selbstverständlich ist die vorliegende Erfindung nicht auf die konkrete Ausgestaltung des hier gezeigten Pressrings 20 beschränkt. Beispielsweise kann auch ein radial geschlitzter Pressring, jedoch ohne zusätzlichen Ringschlitz 22, oder ein gewölbter Pressring, der durch eine axiale Verformung eine radiale Ausdehnung erfährt, im Rahmen der vorliegenden Erfindung eingesetzt werden.

Ein ringförmiges Halteelement wie der in Figur 3 gezeigte Pressring 20 kann auch mit dem Ventileinsatz 2 kombiniert sein, beispielsweise indem diese mittels einer lösbaren Klebverbindung für das Einsetzen in die Stufenbohrung 3 temporär verbunden sind.

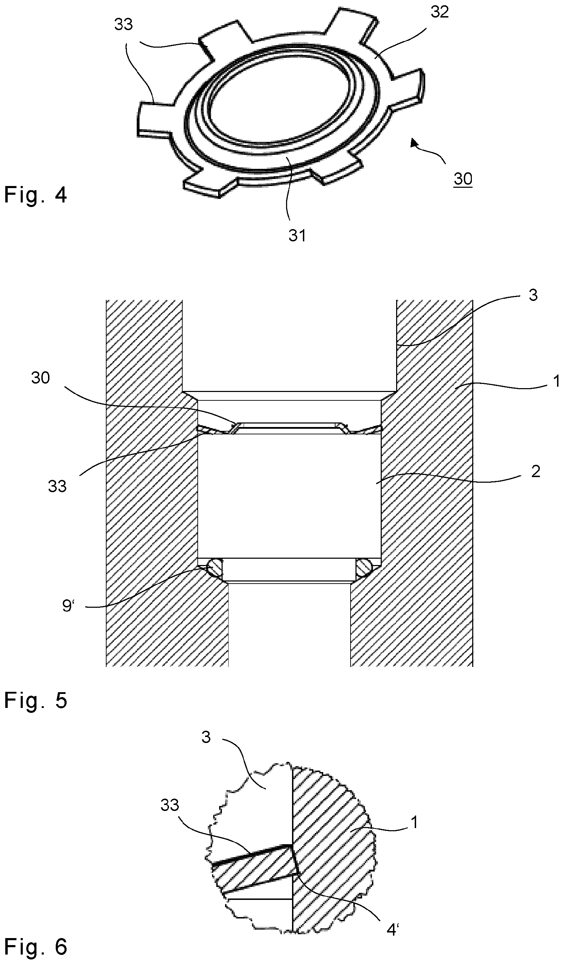

In Figur 4 ist ein weiteres Ausführungsbeispiel für ein ringförmiges Halteelement 30 gezeigt. Dieses besitzt einen inneren gewölbten Ringbereich 31, einen schmalen durchgehenden mittleren Ringbereich 32 und eine Mehrzahl dem inneren Ringbereich 31 entgegengesetzt geneigte Fortsätze 33. Der um die Fortsätze 33 gemessene Außendurchmesser des Halteelement 30 ist etwas größer gewählt als der Innendurchmesser der Stufenbohrung 3. Das Halteelement 30 wird daher beim Niederdrücken in die Stufenbohrung 3 vor allem im Bereich der geneigten Fortsätze elastisch verformt und komprimiert.

In dem Schnittbild in Figur 5 ist das Halteelement 30 oberhalb des Ventilseinsatzes 2 in die Stufenbohrung 3 in dem Bauteil 1 eingesetzt. Der Ventileinsatz 2 ist hierbei durch eine im Stufenbereich liegende O-Ring Dichtung gedichtet. Das Halteelement 30 wird durch axiale Krafteinwirkung auf den gewölbten inneren Ringbereich 31 in die Stufenbohrung 3 eingedrückt und die Fortsätze 32 dabei radial komprimiert. Die Fortsätze 33 liegen somit unter Federspannung elastisch gegen die Innenwand der Stufenbohrung 3 an und bildet eine vor allem reibschlüssige Verbindung mit der Innenwand der Stufenbohrung 3. Da hier anders als bei dem skelettierten Pressring im vorangegangenen Ausführungsbeispiel eine kleinere Auflagefläche der Fortsätze 33 an der Innenwand der Stufenbohrung anliegt, können nur geringere Kräfte übertragen werden, die je nach Anwendung dennoch ausreichend sind, den Ventileinsatz 2 in der Bohrung 3 zu sichern.

Zudem kann durch die auf das Halteelement 30 wirkenden Kräfte, sei es bei der Montage oder durch hydraulische Kräfte auf den Ventileinsatz 2 während des Betriebs, die Innenwand der Stufenbohrung 3 geringfügig plastisch verformt werden (Mirkroverformung), sodass sich zusätzlich zum Reibschluss auch eine formschlüssige Verbindung zwischen dem Halteelement 30 und dem Bauteil 1 ausbildet. Das Halteelement verkrallt sich regelrecht in der Stufenbohrung 3. In Figur 6 ist ein vergrößertes Detail dargestellt, welches die Verformung 4' in der Innenwand der Stufenbohrung 3 durch die federelastisch nach außen drückenden Fortsätze 33 zeigt.

## Patentansprüche

1. Ventilanordnung mit einem ein Ventil aufnehmenden Bauteil (1), in welchem eine Kavität (3) zur Aufnahme eines Ventileinsatzes (2) ausgebildet ist, und mit einem in der Kavität (3) aufgenommenen Ventileinsatz (2), wobei
oberhalb des Ventileinsatzes (2) ein elastisch verformbares Halteelement (5) eingesetzt ist, welches durch elastische Verformung eine formschlüssige Verbindung mit dem Bauteil (1) innerhalb der Kavität (3) ausbildet und damit den Ventileinsatz (2) in der Kavität (3) sichert,
in der Kavität (3) innenseitig ein Hinterschnitt (4) in Form einer Ringnut ausgebildet ist und das Halteelement (5, 20) derart elastisch verformt ist, dass es den Hinterschnitt (4) formschlüssig hintergreift,
das Halteelement (5) als ein federelastischer, geschlitzter Sprengring, insbesondere aus Runddraht oder mit einem polygonförmigen Profil versehen, ausgebildet ist und
der Ventileinsatz (2) an seiner dem Halteelement (4) zugewandten Seite eine radial umlaufende Fase (7) oder Rundung aufweist, gegen die das Halteelement (5) anliegt.

2. Ventilanordnung mit einem ein Ventil aufnehmenden Bauteil (1), in welchem eine Kavität (3) zur Aufnahme eines Ventileinsatzes (2) ausgebildet ist, und mit einem in der Kavität (3) aufgenommenen Ventileinsatz (2), wobei
oberhalb des Ventileinsatzes (2) ein plastisch verformbares Halteelement (20) eingesetzt ist, welches durch Verformung eine formschlüssige Verbindung mit dem Bauteil (1) innerhalb der Kavität (3) ausbildet und damit den Ventileinsatz (2) in der Kavität (3) sichert,
das Halteelement (20) als ein weichmetallisches Verformungselement ausgebildet ist, und
in der Kavität (3) innenseitig ein Hinterschnitt (4), insbesondere in Form einer Ringnut, ausgebildet ist und das Halteelement (20) derart plastisch verformt ist, dass es den Hinterschnitt (4) formschlüssig hintergreift.

3. Ventilanordnung nach Anspruch 2, bei der das Verformungselement (20) durch sich radial von außen bis zu einem um eine Mittelöffnung verlaufenden inneren Ringbereich (23) erstreckende Schlitze (25) oder Ausnehmungen in Sektoren (26) unterteilt ist

4. Ventilanordnung nach Anspruch 3, bei der das Verformungselement (20) scheibenförmig ausgebildet ist, insbesondere bei dem der innere Ringbereich (23) durch einen von radial verlaufenden Stegen (21) unterbrochenen Ringschlitz (22) von dem in Sektoren (26) unterteilten Außenbereich getrennt ist.

5. Ventilanordnung nach Anspruch 3, bei der das Verformungselement (20) gewölbt ausgebildet ist.

6. Ventilanordnung nach einem der vorangehenden Ansprüche, bei der der Ventileinsatz (2) eine radial umlaufende Dichtung (9), insbesondere eine in eine Dichtungsnut (8) eingesetzte Weichdichtung (9), aufweist, mit welcher der Ventileinsatz (2) gegen die Kavität (3) gedichtet ist.

7. Ventilanordnung nach einem der vorangehenden Ansprüche, bei der der Ventileinsatz (2) mit axialem Spiel in die Kavität (3) eingesetzt ist.

8. Ventilanordnung nach einem der vorangehenden Ansprüche, bei der die Kavität (3) als eine vorzugsweise mit einer kegelstumpfförmigen Senkung (6) versehene Bohrung oder Stufenbohrung ausgeführt ist.

9. Ventilanordnung nach einem der vorangehenden Ansprüche, bei der das das Ventil aufnehmende Bauteil (1) ein Ventilblock, ein Ventilgehäuse oder ein mit einem integrierten Ventil versehenes hydraulisches Aggregat, insbesondere eine Pumpe oder ein Hydraulikzylinder ist.

10. Verfahren zur Montage eines Ventileinsatzes (2) in einem den Ventileinsatz (2) aufnehmenden Bauteil (1), wobei
der Ventileinsatz (2) in eine Kavität (3) des Bauteils (1) eingeführt und anschließend oder zusammen mit dem Ventileinsatz (2) oberhalb des Ventileinsatzes (2) ein elastisch verformbares Halteelement (5) in Form eines Sprengringes, insbesondere aus Runddraht oder mit einem polygonförmigen Profil versehen, eingesetzt wird, der durch elastische Verformung innerhalb der Kavität (3) eine formschlüssige Verbindung mit dem Bauteil (1) ausbildet, welche den Ventileinsatz (2) in der Kavität (3) sichert,
das Halteelement (5) beim Einsetzen in Radialrichtung komprimiert wird und nach dem Einsetzen einen in der Kavität (3) innenseitig ausgebildeten Hinterschnitt (4) in Form einer Ringnut formschlüssig hintergreift, und
der Ventileinsatz (2) an seiner dem Halteelement (4) zugewandten Seite eine radial umlaufende Fase (7) oder Rundung aufweist, gegen die das Halteelement (5) anliegt.

11. Verfahren zur Montage eines Ventileinsatzes (2) in einem den Ventileinsatz (2) aufnehmenden Bauteil (1), wobei
der Ventileinsatz (2) in eine Kavität (3) des Bauteils (1) eingeführt und anschließend oder zusammen mit dem Ventileinsatz (2) oberhalb des Ventileinsatzes (2) ein plastisch verformbares Halteelement (20) eingesetzt wird und
das Halteelement (20) nach dem Einsetzen innerhalb der Kavität (3) durch plastische Verformung aufgeweitet wird und einen in der Kavität (3) innenseitig ausgebildeten Hinterschnitt (4), insbesondere in Form einer Ringnut, formschlüssig hintergreift, wodurch eine formschlüssige Verbindung mit dem Bauteil (1) ausbildet wird, welche den Ventileinsatz (2) in der Kavität (3) sichert.
